# EUROPÄISCHE PATENTSCHRIFT

(11) **EP 3 703 960 B1**
(45) Veröffentlichungstag und Bekanntmachung des Hinweises auf die Patenterteilung: **22.09.2021**
(21) Anmeldenummer: 18748894.5
(22) Anmeldetag: 30.07.2018
(51) Int. Cl.: B60C 11/04, B60C 11/13, B60C 11/03

(54) **NUTZFAHRZEUGREIFEN**
COMMERCIAL VEHICLE TYRE
PNEUMATIQUES POUR VÉHICULES UTILITAIRES

(30) Priorität: 03.11.2017 DE 102017219532
(43) Veröffentlichungstag der Anmeldung: 09.09.2020
(73) Patentinhaber: Continental Reifen Deutschland GmbH, 30165 Hannover (DE)
(72) Erfinder: LUTZ, André, 30419 Hannover (DE); KRISTEN, Florian, 30419 Hannover (DE)
(74) Vertreter: Continental Corporation
(86) Internationale Anmeldenummer: PCT/EP2018/070527
(87) Internationale Veröffentlichungsnummer: WO 2019/086153

(56) Entgegenhaltungen:
- EP-A1- 3 100 873
- JP-A- 2011 168 223
- JP-A- 2012 183 962
- US-A1- 2012 018 068
- US-A1- 2013 000 806
- US-A1- 2013 098 520

## Beschreibung

Die Erfindung betrifft einen Nutzfahrzeugreifen mit einem Laufstreifen mit zumindest einer Umfangsrille mit einem Rillengrund und Rillenwänden, wobei am Rillengrund über den Umfang verteilt und mittig als Steinauswerfer wirkende Grundanhebungen mit einer Höhe und einer größeren Erstreckung in Umfangsrichtung als in axialer Richtung ausgebildet sind, wobei die Grundanhebungen entweder die Rillenwände kontaktieren oder von diesen in axialer Richtung Abstände von bis zu 4,0 mm aufweisen und in radialer Richtung von einer Deckfläche mit einem umlaufenden Flächenrand begrenzt sind, wobei die Deckfläche zum Flächenrand abfällt, wobei die Rillenwände zwischen den Grundanhebungen sich zueinander annähernde Wandabschnitte und seitlich der Grundanhebungen in Draufsicht zueinander konvex gekrümmte Wandabschnitte aufweisen und wobei der Flächenrand der Deckfläche dem Verlauf der zueinander konvex gekrümmten Wandabschnitte derart folgt, dass die Breite der Grundanhebungen zu ihren in Umfangsrichtung liegenden Enden abnimmt.

Aus der US 2012 018 068 A1 ist ein Fahrzeugluftreifen mit einem Laufstreifen mit Umfangsrillen mit in Draufsicht wellenförmig verlaufenden Rillenflanken bekannt, wobei die Umfangsrillen jeweils bezüglich in Umfangsrichtung verlaufenden Rillenmittellinien symmetrisch ausgeführt sind, sodass sich die Breite der Umfangsrillen kontinuierlich ändert. Gemäß einer Ausführungsvariante sind im Bereich der breitesten Stellen der Umfangsrillen in Umfangsrichtung langgestreckte, kuppelartige Grundanhebungen ausgebildet. Beim Fahren auf nassem Untergrund soll von den Umfangsrillen aufgenommenes Wasser über die Rillenflanken aus den Umfangsrillen gut ausgetragen werden können, wobei die kuppelartigen Grundanhebungen einen verstärken Wasserfluss entlang der Rillenflanken bewirken und derart dazu beitragen, Wasser aus den Umfangsrillen herauszufördern.

Die JP 2012 183 962 A offenbart einen Fahrzeugluftreifen mit einem Laufstreifen mit einer zwei Profilrippen voneinander trennenden, zentralen Umfangsrille mit in Draufsicht wellenförmig verlaufenden Rillenflanken, wobei die Umfangsrille bezüglich einer in Umfangsrichtung umlaufenden Rillenmittellinie symmetrisch ausgeführt ist. In der einen Profilrippe sind von der Laufstreifenperipherie ausgehende Vertiefungen ausgebildet, welche in die Umfangsrille einmünden. Die Vertiefungen setzen sich jeweils aus einem großvolumigen Vertiefungsteil, welcher von der Umfangsrille beabstandet ist, und einem kleinvolumigen, einschittförmigen Vertiefungsteil, welcher in die Umfangsrille einmündet, zusammen. Die Vertiefungen sollen in Kombination mit der Umfangsrille für ein geringes Reifenfahrbahngeräusch sorgen, wobei gleichzeitig das Wasserdrainagevermögen nicht reduziert ist.

Ferner offenbart die JP S6 325 107 A einen Nutzfahrzeugreifen mit einem Laufstreifen mit einer zentralen Umfangsrille, an deren Rillengrund als Steinauswerfer wirkende Grundanhebungen ausgebildet sind. Die Grundanhebungen sind in Draufsicht in der Gestalt von in Umfangsrichtung langgezogenen Sechsecken ausgebildet und in radialer Richtung durch im Wesentlichen parallel zur Laufstreifenperipherie orientierte, ebene Deckflächen begrenzt. In axialer Richtung weisen die Grundanhebungen eine Breite von 25% bis 40% der Profiltiefe und in radialer Richtung eine Höhe von 20% bis 60% der Profiltiefe auf. Zwischen den Grundanhebungen sind an Rillenwänden in Draufsicht trapezförmige Vorsprünge ausgebildet, welche in radialer Richtung eine Höhe von 20% bis 60% der Profiltiefe aufweisen.

Aus der US 4 345 632 A ist ein Nutzfahrzeugreifen mit einem Laufstreifen bekannt, welcher eine in Draufsicht zick-zack-förmig verlaufende Umfangsrille aufweist, an deren Rillengrund von den Rillenwänden beabstandete Grundanhebungen als Steinauswerfer ausgebildet sind. Die Grundanhebungen weisen eine Höhe von 20% bis 60% der Profiltiefe und in Umfangsrichtung eine Länge von beispielsweise 6,0 mm auf.

Die DE 37 27 050 A1 offenbart einen weiteren Nutzfahrzeugreifen mit einem Laufstreifen mit einer in Draufsicht zick-zack-förmig verlaufenden Umfangsrille mit als Steinauswerfer wirkenden Grundanhebungen am Rillengrund. Die Grundanhebungen haben in Umfangsrichtung beispielsweise eine Erstreckungslänge von 4,0 mm. Zwischen diesen Grundanhebungen verlaufen weitere stegartig gestaltete Grundanhebungen.

Die aus dem Stand der Technik bekannten und als Steinauswerfer wirkenden Grundanhebungen weisen Ausgestaltungen und Dimensionen auf, die sich zum sicheren Auswerfen von größeren Steinen mangels Stabilität als wenig geeignet erwiesen haben. Die folglich in den Rillen eingeklemmten Steine können unerwünschte Beschädigungen der Rillenwände und der Steinauswerfer verursachen.

Der Erfindung liegt daher die Aufgabe zugrunde, bei einem Nutzfahrzeugreifen der eingangs genannten Art die Wirksamkeit der als Steinauswerfer wirkenden Grundanhebungen zum sicheren Auswerfen größerer Steine zu verbessern.

Gelöst wird die gestellte Aufgabe erfindungsgemäß dadurch, dass die Deckfläche von der an der höchsten Stelle der jeweiligen Grundanhebung vorliegenden Höhe gleichmäßig auf die Höhe des Flächenrands abfällt, wobei die maximale Höhe der Grundanhebungen in radialer Richtung 25% bis 60% der Profiltiefe beträgt und dass die in Draufsicht zueinander konvex gekrümmten Wandabschnitte der Rillenwände, im

Querschnitt der Umfangsrille betrachtet, zumindest über den Großteil ihrer radialen Erstreckung konvex zueinander gekrümmt sind.

Bei der Erfindung sind die Steinauswerfer Bestandteile eines Rillenkonzeptes bzw. auf die Gestaltung der Rillenwände abgestimmt. Die Anpassung der Ausgestaltung der Grundanhebungen an die zueinander konvex gekrümmten Wandabschnitte der Rillenwände erhöht besonders deutlich die Stabilität der Grundanhebungen und dadurch ihr Vermögen, auch größere Steine effektiv auswerfen zu können. Die Richtung Rillengrund abfallenden Deckflächen der Grundanhebungen "verteilen" die von eingefangenen Steinen auf die Grundanhebungen wirkenden Kräfte, verringern dadurch die Gefahr eines Verklemmens der Steine und bewahren sowohl die Grundanhebungen als auch die Rillenwände und den Rillengrund vor Beschädigungen durch in die Rille eindringende Steine. Die im Querschnitt der Umfangsrille konvex zueinander gekrümmten Wandabschnitte der Rillenwände haben zudem eine abstützende, stabilisierende Wirkung auf die Rillenwände im Bereich der Grundanhebungen und tragen ebenfalls dazu bei, die Wirkung der Grundanhebungen zu verbessern.

Gemäß einer bevorzugten Ausführungsvariante weisen die Grundanhebungen in Draufsicht die Gestalt von in Umfangsrichtung langgestreckten Rauten mit abgerundeten Ecken auf. Solche Grundanhebungen wirken mit den konvex gekrümmten Wandabschnitten der Rillenwände derart zusammen, dass die steinauswerfende Wirkung zusätzlich verbessert ist. Durch die Rautenform sind die Grundanhebungen ferner besonders stabil.

Gemäß einer bevorzugten Ausführungsvariante setzen sich die Grundanhebungen aus einem Basisteil mit einer in radialer Richtung konstanten Höhe und einem auf diesen aufgesetzten kuppelartigen Oberteil zusammen. Es ist dabei bevorzugt, wenn die Höhe des Basisteiles der Grundanhebungen 35% bis 90%, insbesondere 40% bis 80%, der maximalen Höhe der Grundanhebungen beträgt. Ein solcher Basisteil erhöht die Stabilität der Grundanhebung.

Ferner ist es bevorzugt, wenn die Deckfläche der Grundanhebungen eine Kerndeckfläche und eine diese umlaufende zum Flächenrand der Deckfläche abfallende Randdeckfläche aufweisen, um ein Verklemmen von Steinen zu vermeiden.

Gemäß einer bevorzugten weiteren Ausführungsvariante sind die Grundanhebungen ausschließlich von ihren Deckflächen begrenzt. Derart kann ebenfalls die Stabilität der Grundanhebungen erhöht werden. Solche Grundanhebungen weisen vorzugsweise die Gestalt eines halben Ellipsoids oder eines Teilstückes eines halben Ellipsoids auf. Durch die komplett abgerundeten Deckflächen solcher Ellipsoide wird zum einen ein Verklemmen von Steinen sehr wirksam verhindert und zum anderen sind die Grundanhebungen besonders resistent gegenüber etwaigen Beschädigungen durch Steine.

Die Grundanhebungen sind besonders stabil, wenn sie gemäß einer weiteren bevorzugten Variante in Umfangsrichtung an ihrer längsten Stelle eine Erstreckungslänge von 10,0 mm bis 35,0 mm, insbesondere von 15,0 mm bis 25,0 mm, aufweisen. Solche Grundanhebungen sind gegenüber herkömmlich gestalteten "Steinauswerfern" deutlich größer und stabiler.

Gemäß einer weiteren bevorzugten Variante beträgt die maximale Höhe der Grundanhebungen 30% bis 55%, vorzugsweise höchstens 50%, der Profiltiefe. Diese Maßnahme trägt ebenfalls zur Stabilität der Grundanhebungen bei und verbessert insbesondere über ein vorteilhaftes Zusammenwirken mit den gekrümmten Wandabschnitten die steinauswerfende Wirkung.

In diesem Zusammenhang ist es ferner von Vorteil, wenn die Grundanhebungen in axialer Richtung an ihrer breitesten Stelle eine Breite von 5,0 mm bis 15,0 mm aufweisen.

Gemäß einer weiteren bevorzugten Variante ist vorgesehen, dass zwischen den Wandabschnitten, welche sich zwischen den Grundanhebungen zueinander annähern, ein Rillenpfad der Umfangsrille verläuft, welcher an seiner schmalsten Stelle eine Breite von 15% bis 45%, insbesondere von höchstens 35%, der Breite der Umfangsrille an der Laufstreifenperipherie aufweist. Durch solche Rillenpfade werden insbesondere die Wasserableiteigenschaften in den Umfangsrillen vorteilhaft beeinflusst.

Ferner ist es bevorzugt, wenn die Wandabschnitte, welche sich zwischen den Grundanhebungen zueinander annähern, in die Umfangsrille hineinragende, paarweise gegenüberliegende, insbesondere nasenartig gestaltete Vorsprünge begrenzen. Solche Vorsprünge als Bestandteil des erwähnten Rillenkonzeptes verbessern einerseits selbst und anderseits durch ein Zusammenwirken mit den Grundanhebungen die steinauswerfende Wirkung. Zusätzlich zeigen auch die Vorsprünge eine abstützende, stabilisierende Wirkung auf die Rillenwände im Bereich der Grundanhebungen.

Gemäß einer weiteren bevorzugten Ausführung weisen die in Draufsicht zueinander konvex gekrümmten Wandabschnitte zu den Grundanhebungen an ihren radial inneren Enden einen Abstand von 2,0 mm bis 4,0 mm auf.

Gemäß einer weiteren bevorzugten Ausführungsvariante verlaufen die Rillenwände der Umfangsrille in Draufsicht wellenförmig und bezüglich einer von der Umfangsrichtung und der radialen Richtung aufgespannten Ebene symmetrisch. Diese Variante stellt ein weiteres besonders vorteilhaftes Rillenkonzept mit Steinauswerfern zur Verfügung.

Weitere Merkmale, Vorteile und Einzelheiten der Erfindung werden nun anhand der Zeichnungen, die schematisch Ausführungsbeispiele der Erfindung zeigen, näher beschrieben.

### Dabei zeigen

Fig. 1 eine Draufsicht auf einen zentralen Umfangsabschnitt eines Laufstreifens eines Nutzfahrzeugreifens mit einer ersten Ausführungsvariante der Erfindung,
Fig. 2 eine vergrößerte Draufsicht auf einen Umfangsabschnitt einer Umfangsrille des Laufstreifens aus Fig. 1,
Fig. 3 eine Schrägansicht auf den Umfangsabschnitt aus Fig. 2,
Fig. 4 einen Schnitt entlang der Linie IV-IV der Fig. 2,
Fig. 5 einen Schnitt entlang der Linie V-V der Fig. 2,
Fig. 6 einen Schnitt entlang der Linie VI-VI der Fig. 2,
Fig. 7 einen Schnitt entlang der Linie VII-VII der Fig. 2,
Fig. 8 einen Schnitt entlang der Linie VIII-VIII der Fig. 2,
Fig. 9a eine Draufsicht auf einen Umfangsabschnitt einer Umfangsrille eines Laufstreifens mit einer zweiten Ausführungsvariante der Erfindung,
Fig. 9b eine Schrägansicht auf den Umfangsabschnitt aus Fig. 9a,
Fig. 10a eine Draufsicht auf einen Umfangsabschnitt einer Umfangsrille eines Laufstreifens mit einer dritten Ausführungsvariante der Erfindung,
Fig. 10b eine Schrägansicht auf den Umfangsabschnitt aus Fig. 10a und
Fig. 10c einen Schnitt entlang der Linie Xc-Xc der Fig. 10a.

Erfindungsgemäß ausgeführte Nutzfahrzeugreifen sind Reifen in Radialbauart, insbesondere für Baustellenfahrzeuge, Lastkraftwagen oder Busse.

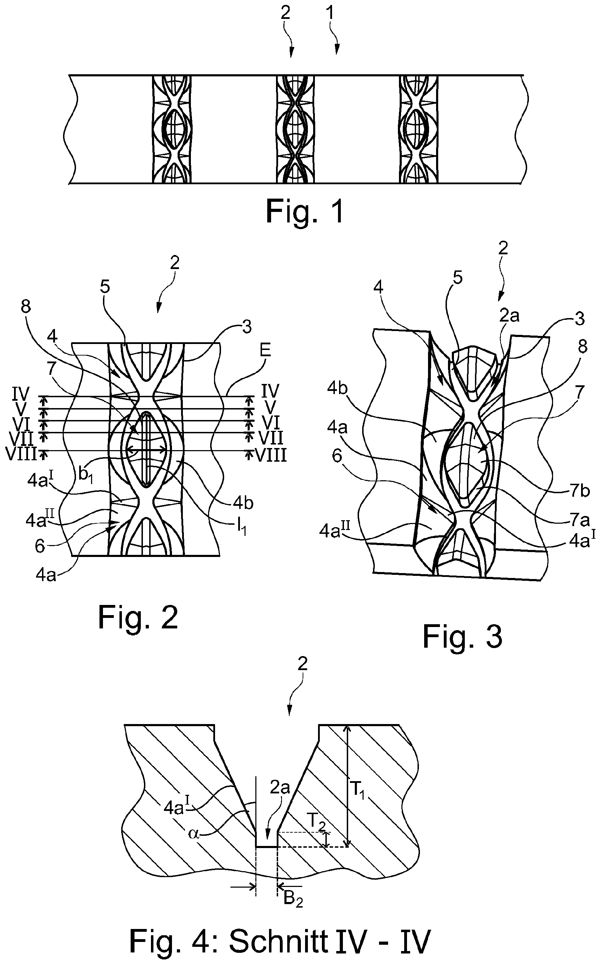

Der in Fig. 1 gezeigte zentrale Umfangsabschnitt eines Laufstreifens weist vier in Umfangsrichtung umlaufende Profilpositive 1 auf, welche schematisch und vereinfacht dargestellt sind und insbesondere in bekannter Weise ausgeführte Profilbänder oder Profilblockreihen sind. In axialer Richtung benachbarte Profilpositive 1 sind von je einer in Draufsicht gerade verlaufenden Umfangsrille 2 getrennt.

Die Umfangsrillen 2 sind beim gezeigten Ausführungsbeispiel übereinstimmend ausgeführt. Die Ausgestaltung der Umfangsrillen 2 wird nachfolgend anhand der in Fig. 2 bis Fig. 8 gezeigten Umfangsrille 2 beschrieben.

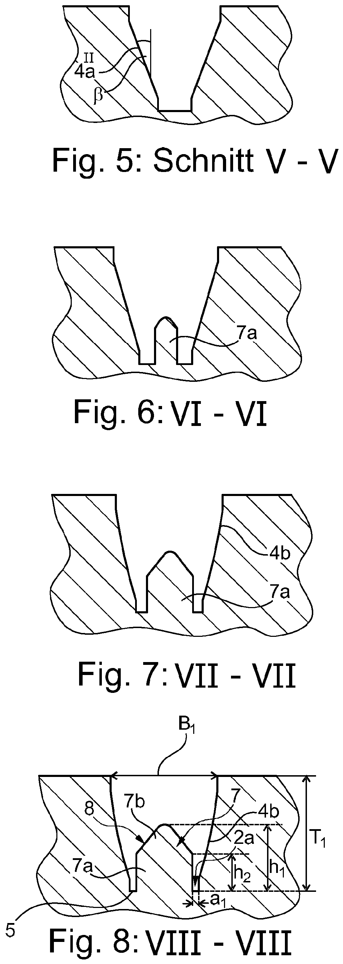

Wie Fig. 2 und Fig. 3 zeigen, ist die Umfangsrille 2 an der Laufstreifenperipherie durch zwei im Wesentlichen in Umfangsrichtung und im gezeigten Ausführungsbeispiel in Draufsicht leicht wellenförmig verlaufende Rillenkanten 3 sowie ferner durch an die Rillenkanten 3 anschließende Rillenwände 4 und einen Rillengrund 5 begrenzt. Die Umfangsrille 2 weist in radialer Richtung an ihrer tiefsten Stelle die für den jeweiligen Nutzfahrzeugreifen vorgesehene Profiltiefe T₁ (Fig. 4, Fig. 8) von 12,0 mm bis 26,0 mm und an der Laufstreifenperipherie an ihrer breitesten Stelle in axialer Richtung eine Breite B₁ (Fig. 8) von insbesondere 10,0 mm bis 25,0 mm auf. Gemäß Fig. 4 bis Fig. 8 weisen die Rillenwände 4 beim gezeigten Ausführungsbeispiel, im Querschnitt betrachtet, in radialer Richtung verlaufende radial äußere Abschnitte auf, zwischen welche die Umfangsrille 2 ebenfalls die Breite B₁ aufweist.

Jede Rillenwand 4 begrenzt und bildet eine Vielzahl von in Umfangsrichtung aufeinanderfolgenden, in regelmäßigen Abständen über die gesamte Erstreckung der Umfangsrille 2 angeordneten, flach nasenartigen Vorsprüngen 6, wobei jeder Vorsprung 6 von einem Wandabschnitt 4a der jeweiligen Rillenwand 4 begrenzt ist. Die von Wandabschnitten 4a an beiden Rillenwänden 4 begrenzten Vorsprünge 6 liegen einander paarweise gegenüber und sind bezüglich einer von der Umfangsrichtung und der radialen Richtung aufgespannten, durch die Mitte der Umfangsrille 2 verlaufenden Ebene symmetrisch ausgeführt.

Jeder Vorsprung 6 ist zusätzlich bezüglich einer von der radialen Richtung und der axialen Richtung aufgespannten, durch die Mitte des Vorsprunges 6 verlaufenden Ebene, welche entlang der in Fig. 2 eingezeichneten Schnittlinie IV-IV verläuft, symmetrisch ausgeführt. Die die Vorsprünge 6 begrenzenden Wandabschnitte 4a setzen sich aus einem den Nasenrücken bildenden, leicht nach außen gekrümmten mittleren Wandbereich 4a^{I} und zwei an diesen anschließenden, die Nasenflügel bildenden, seitlichen Wandbereichen 4a^{II} zusammen. Der mittlere Wandbereich 4a^{I} des Wandabschnittes 4a verläuft in der erwähnten, mit der Schnittlinie IV-IV zusammenfallenden Ebene, im Querschnitt betrachtet, zur radialen Richtung unter einem Winkel α (Fig. 4) von 10° bis 30°. Die seitlichen Wandbereiche 4a^{II} des Wandabschnittes 4a sind vorzugsweise ebene Flächen, welche zur Umfangsrichtung geneigt sind (Fig. 3) und, im Querschnitt betrachtet, zur radialen Richtung unter einem Winkel β (Fig. 5) von beispielsweise 5° bis 25° verlaufen, wobei β < α gilt.

Zwischen den an derselben Rillenwand 4 ausgebildeten, in Umfangsrichtung unmittelbar aufeinanderfolgenden Vorsprüngen 6 verlaufen in Draufsicht sichelförmige Wandabschnitte 4b. Die zu einer Rillenwand 4 gehörenden sichelförmigen Wandabschnitte 4b sind bezüglich der jeweils zur gegenüberliegenden Rillenwand 4 gehörenden sichelförmigen Wandabschnitte 4b in Draufsicht konvex gekrümmt. Entsprechend ihrer Sichelform laufen die Wandabschnitte 4b entlang der die Nasenflügel bildenden, seitlichen Wandbereiche 4a^{II} aus. Ferner sind die Wandabschnitte 4b, im Querschnitt betrachtet, derart leicht gebogen, sodass die zu den unterschiedlichen Rillenwänden 4 gehörenden Wandabschnitte 4b auch im Querschnitt leicht konvex zueinander gekrümmt sind (Fig. 7, Fig. 8).

In jedem Zwischenraum, welcher sich zwischen gegenüberliegenden, zueinander konvex gekrümmten Wandabschnitten 4b befindet, ist mittig am Rillengrund 5 der Umfangsrille 2 eine als Steinauswerfer wirkende Grundanhebung 7 ausgebildet. Jede Grundanhebung 7 befindet sich daher zwischen zwei in Umfangsrichtung unmittelbar aufeinanderfolgenden Paaren von gegenüberliegenden Vorsprüngen 6. In Draufsicht weist jede Grundanhebung 7 die Form einer in Umfangsrichtung langgestreckten Raute mit abgerundeten Ecken, insbesondere im Wesentlichen die Gestalt eines "Footballs", auf. Am Rillengrund 5 der Umfangsrille 2 verbleibt ein Rillenpfad 2a (Fig. 3), welcher sämtliche Grundanhebungen 7 umläuft und sich in Draufsicht im Wesentlichen entlang von zwei sich kreuzenden Wellen erstreckt, die eine übereinstimmende Wellenlänge aufweisen und um die Hälfte der Wellenlänge in Umfangsrichtung zueinander phasenverschoben sind.

Der Rillenpfad 2a weist zwischen den mittleren Wandbereichen 4a^{I} einander gegenüberliegender Vorsprünge 6 in radialer Richtung eine Tiefe T₂ (Fig. 4) von bis zu 4,0 mm, insbesondere von zu 3,0 mm, auf. Ferner weist der Rillenpfad 2a zwischen diesen Wandbereichen 4a^{I} an seiner schmalsten Stelle in axialer Richtung eine Breite B₂ (Fig. 4) von 15% bis 45%, insbesondere von höchstens 35%, der Breite B₁ (Fig. 8) der Umfangsrille 2 auf. Im Bereich zwischen den sichelförmigen Wandabschnitten 4b und den Grundanhebungen 7 ist die Breite des Rillenpfades 2a derart, dass die Grundanhebungen 7 an der schmalsten Stelle des Rillenpfades 2a zu den sichelförmigen Wandabschnitten 4b in axialer Richtung einen Abstand a₁ (Fig. 8) von 2,0 mm bis 4,0 mm aufweisen.

Jede Grundanhebung 7 weist in Umfangsrichtung eine größte Erstreckungslänge l₁ (Fig. 2) von 10,0 mm bis 35,0 mm, insbesondere von 15,0 mm bis 25,0 mm, auf, welche mit den Abständen in Umfangsrichtung aufeinanderfolgender paarweiser einander zugeordneter Vorsprünge 6 korreliert. In radialer Richtung weist jede Grundanhebung 7 in ihrem mittleren Bereich an ihrer höchsten Stelle eine Höhe h₁ (Fig. 8) auf, welche 25% bis 60%, insbesondere 30% bis 55%, und besonders bevorzugter Weise höchstens 50%, der jeweils vorgesehenen Profiltiefe T₁ beträgt. In axialer Richtung weist jede Grundanhebung 7 an ihrer breitesten Stelle eine Breite b₁ (Fig. 2) von 5,0 mm bis 15,0 mm auf.

Gemäß Fig. 3 setzt sich jede Grundanhebung 7 aus einem Basisteil 7a und einem auf diesen aufgesetzten kuppelartigen Oberteil 7b zusammen. Wie Fig. 6 bis Fig. 8 zeigen, ist der Basisteil 7a im Querschnitt rechteckig ausgeführt und weist in radialer Richtung eine ausgehend vom Rillengrund 5 ermittelte Höhe h₂ auf, welche 35% bis 80%, insbesondere 40% bis 60%, der Höhe h₁ der Grundanhebung 7 entspricht (Fig. 8).

Der kuppelartige Oberteil 7b ist in radialer Richtung durch eine Deckfläche 8 (Fig. 8) begrenzt, welche von der an der höchsten Stelle der Grundanhebung 7 vorliegenden Höhe h₁ zu den Rändern des kuppelartigen Oberteiles 7b gleichmäßig auf die Höhe h₂ abfällt. Wie insbesondere Fig. 2 und Fig. 3 zeigen, ist die Deckfläche 8 vorzugsweise von mehreren, beim gezeigten Ausführungsbeispiel von neun, ebenen Teildeckflächen gebildet.

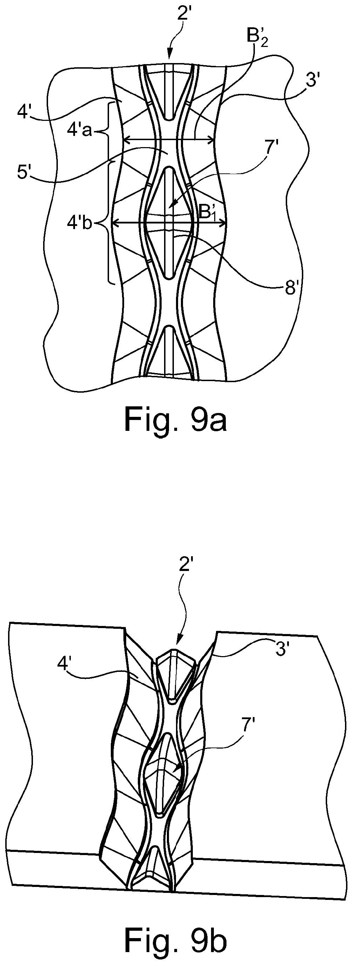

Fig. 9a und Fig. 9b zeigen eine Umfangsrille 2', welche eine Variante der Umfangsrille 2 ist und sich von dieser durch in Draufsicht wellenförmig verlaufende Rillenkanten 3' sowie durch an diese anschließende, in Draufsicht wellenförmig verlaufende Rillenwände 4' unterscheidet. Die Rillenwände 4' verlaufen zur radialen Richtung vorzugszugsweise unter einem konstanten Winkel von 5° bis 30°, insbesondere von 10° bis 20°. Die beiden Rillenkanten 3' und die beiden Rillenwände 4' sind zueinander jeweils bezüglich einer von der Umfangsrichtung und der radialen Richtung aufgespannten Ebene symmetrisch ausgeführt, wobei die Umfangsrille 2' an der Laufstreifenperipherie an ihrer breitesten Stelle eine Breite B₁' und an der schmalsten Stelle eine Breite B₂' aufweist. Die Breite B₁' beträgt 10,0 mm bis 25,0 mm, die Breite B₂' beträgt 75% bis 95% der Breite B₁'. Die Rillenwände 4' weisen in Umfangsrichtung abwechselnd in Draufsicht zueinander konkav gekrümmte Wandabschnitte 4'a und in Draufsicht zueinander konvex gekrümmte Wandabschnitte 4'b auf

In jedem Zwischenraum, welcher sich zwischen gegenüberliegenden, zueinander konvex gekrümmten Wandabschnitten 4'b befindet, ist mittig am Rillengrund der Umfangsrille 2' eine zur Grundanhebung 7 der ersten Ausführungsvariante (Fig. 1 bis Fig. 8) übereinstimmend gestaltete Grundanhebung 7' mit einer Deckfläche 8' ausgebildet, welche beim gezeigten Ausführungsbeispiel die Rillenwände 4' an ihren radial inneren Endbereichen kontaktiert (Fig. 9b). Bevorzugter Weise verbleibt am Rillengrund der Umfangsrille 2' ein Rillenpfad, welcher sämtliche Grundanhebungen 7' umläuft und in axialer Richtung zu den Wandabschnitten 4'b einen Abstand von 2,0 mm bis 4,0 mm aufweist. Vom Rillengrund der Umfangsrille 2' verbleibt eine Vielzahl von zwischen einander benachbarten Grundanhebungen 7' auf Profiltiefe verlaufenden, in Draufsicht in Umfangsrichtung langgestreckt X-artigen Rillengrundbereichen 5'.

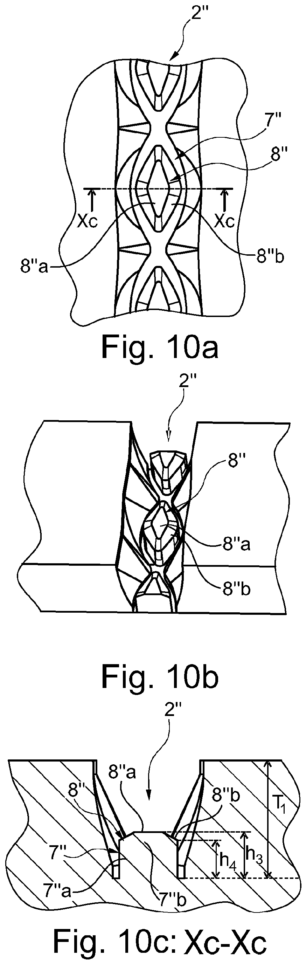

Fig. 10a und Fig. 10b zeigen eine Umfangsrille 2", welche eine weitere Variante der Umfangsrille 2 ist. Die Umfangsrille 2" unterscheidet sich von der Umfangsrille 2 durch von deren Grundanhebungen 7 abweichend gestalteten Grundanhebungen 7". Die Grundanhebungen 7" sind in radialer Richtung durch eine Deckfläche 8" begrenzt, welche eine parallel zur Laufstreifenperipherie ausgerichtete Kerndeckfläche 8"a und eine diese umlaufende zum Rand der Grundanhebung 7" abfallende Randdeckfläche 8"b aufweist. In radialer Richtung weisen die Grundanhebungen 7" im Bereich der Kerndeckfläche 8"a eine Höhe h₃ (Fig. 10c) auf, welche 25% bis 60%, insbesondere 30% bis 55%, und besonders bevorzugter Weise höchstens 50%, der Profiltiefe T₁ beträgt. Wie Fig. 10c. zeigt, setzen sich die Grundanhebungen 7" aus einem Basisteil 7"a und einem auf diesem aufgesetzten, im Querschnitt trapezförmigen Oberteil 7"b zusammen. Der Basisteil 7"a reicht in radialer Richtung bis in eine Höhe h₄, welche 35% bis 90%, insbesondere 70% bis 80%, der Höhe h₃ der Grundanhebung 7" entspricht (Fig. 8).

Die Erfindung ist auf die beschriebenen Ausführungsvarianten nicht beschränkt. Die Grundanhebungen können eine von der beschriebenen Gestalt abweichende Form aufweisen, insbesondere die Form von halben Ellipsoiden oder in Form von Teilstücken von halben Ellipsoiden. Die Rillenwände der Umfangsrillen können auch ohne den im Zusammenhang mit der ersten Ausführungsvariante (Fig. 4 bis Fig. 8) erwähnten, in radialer Richtung verlaufenden radial äußeren Abschnitten ausgeführt sein.

### Bezugsziffernliste

- 1: Profilpositiv
- 2, 2', 2": Umfangsrille
- 2a: Rillenpfad
- 3, 3': Rillenkante
- 4,: Rillenwand
- 4a, 4'a: Wandabschnitt
- 4a^{I}, 4a^{II}: Wandbereich
- 4b, 4'b: Wandabschnitt
- 4c: Verbindungsfläche
- 5: Rillengrund
- 5': Rillengrundbereich
- 6: Vorsprung
- 7, 7', 7": Grundanhebung
- 7a, 7"a: Basisteil
- 7b, 7"b: Oberteil
- 8, 8', 8": Deckfläche
- 8"a: Kerndeckfläche
- 8"b: Randdeckfläche
- a₁: Abstand
- b₁: Breite
- B₁, B₂: Breite
- B₁', B₂': Breite
- l₁: Erstreckungslänge
- h₁, h₂, h₃, h₄: Höhe
- T₁: Profiltiefe
- T₂: Tiefe
- α, β: Winkel

## Patentansprüche

1. Nutzfahrzeugreifen mit einem Laufstreifen mit zumindest einer Umfangsrille (2, 2', 2") mit einem Rillengrund (5) und Rillenwänden (4, 4'), wobei am Rillengrund (5) über den Umfang verteilt und mittig als Steinauswerfer wirkende Grundanhebungen (7, 7', 7") mit einer Höhe (h₁, h₃) und einer größeren Erstreckung in Umfangsrichtung als in axialer Richtung ausgebildet sind, wobei die Grundanhebungen (7, 7', 7") entweder die Rillenwände (4, 4') kontaktieren oder von diesen in axialer Richtung Abstände (a₁) von bis zu 4,0 mm aufweisen und in radialer Richtung von einer Deckfläche (8, 8', 8") mit einem umlaufenden Flächenrand begrenzt sind, wobei die Deckfläche (8, 8', 8") zum Flächenrand abfällt, wobei die Rillenwände (4, 4') zwischen den Grundanhebungen (7, 7', 7") sich zueinander annähernde Wandabschnitte (4a, 4'a) und seitlich der Grundanhebungen (7, 7', 7") in Draufsicht zueinander konvex gekrümmte Wandabschnitte (4b, 4'b) aufweisen und wobei der Flächenrand der Deckfläche (8, 8', 8") dem Verlauf der zueinander konvex gekrümmten Wandabschnitte (4b, 4'b) derart folgt, dass die Breite der Grundanhebungen (7, 7', 7") zu ihren in Umfangsrichtung liegenden Enden abnimmt,
**dadurch gekennzeichnet,**
**dass** die Deckfläche von der an der höchsten Stelle der jeweiligen Grundanhebung (7, 7', 7") vorliegenden Höhe (h₁) gleichmäßig auf die Höhe (h₂) des Flächenrands abfällt, wobei die maximale Höhe (h₁, h₃) der Grundanhebungen (7, 7', 7") in radialer Richtung 25% bis 60% der Profiltiefe (T₁) beträgt und
**dass** die in Draufsicht zueinander konvex gekrümmten Wandabschnitte (4b, 4'b) der Rillenwände (4, 4'), im Querschnitt der Umfangsrille (2, 2', 2") betrachtet, zumindest über den Großteil ihrer radialen Erstreckung konvex zueinander gekrümmt sind.

2. Nutzfahrzeugreifen nach Anspruch 1, **dadurch gekennzeichnet, dass** die Grundanhebungen (7, 7', 7") in Draufsicht die Gestalt von in Umfangsrichtung langgestreckten Rauten mit abgerundeten Ecken aufweisen.

3. Nutzfahrzeugreifen nach Anspruch 1 oder 2, **dadurch gekennzeichnet, dass** sich die Grundanhebungen (7, 7', 7") aus einem Basisteil (7a, 7"a) mit einer in radialer Richtung konstanten Höhe (h₂) und einem auf diesen aufgesetzten kuppelartigen Oberteil (7b, 7"b) zusammensetzen.

4. Nutzfahrzeugreifen nach Anspruch 3, **dadurch gekennzeichnet, dass** die Höhe (h₂, h₄) des Basisteiles (7a, 7"a) der Grundanhebungen (7, 7', 7") 35% bis 90%, insbesondere 40% bis 80%, der maximalen Höhe (h₁, h₃) der Grundanhebungen (7, 7', 7") beträgt.

5. Nutzfahrzeugreifen nach einem der Ansprüche 1 bis 4, **dadurch gekennzeichnet, dass** die Deckfläche (8") der Grundanhebungen (7") eine Kerndeckfläche (8"a) und eine diese umlaufende zum Flächenrand der Deckfläche (8") abfallende Randdeckfläche (8"b) aufweist.

6. Nutzfahrzeugreifen nach Anspruch 1 oder 2, **dadurch gekennzeichnet, dass** die Grundanhebungen ausschließlich von ihren Deckflächen begrenzt sind.

7. Nutzfahrzeugreifen nach Anspruch 1, 2 oder 6, **dadurch gekennzeichnet, dass** die Grundanhebungen die Gestalt eines halben Ellipsoids oder eines Teilstückes eines halben Ellipsoids aufweisen.

8. Nutzfahrzeugreifen nach einem der Ansprüche 1 bis 7, **dadurch gekennzeichnet, dass** die Grundanhebungen (7, 7', 7") in Umfangsrichtung an ihrer längsten Stelle eine Erstreckungslänge (l₁) von 10,0 mm bis 35,0 mm, insbesondere von 15,0 mm bis 25,0 mm, aufweisen.

9. Nutzfahrzeugreifen nach einem der Ansprüche 1 bis 8, **dadurch gekennzeichnet, dass** die maximale Höhe (h₁, h₃) der Grundanhebungen (7, 7', 7") 30% bis 55%, vorzugsweise höchstens 50%, der Profiltiefe (T₁) beträgt.

10. Nutzfahrzeugreifen nach einem der Ansprüche 1 bis 9, **dadurch gekennzeichnet, dass** die Grundanhebungen (7, 7', 7") in axialer Richtung an ihrer breitesten Stelle eine Breite (b₁) von 5,0 mm bis 15,0 mm aufweisen.

11. Nutzfahrzeugreifen nach einem der Ansprüche 1 bis 10, **dadurch gekennzeichnet, dass** zwischen den Wandabschnitten (4a), welche sich zwischen den Grundanhebungen (7, 7") zueinander annähern, ein Rillenpfad (2a) der Umfangsrille (2, 2") verläuft, welcher an seiner schmalsten Stelle eine Breite (B₂) von 15% bis 45%, insbesondere von höchstens 35%, der Breite (B₁) der Umfangsrille (2, 2") an der Laufstreifenperipherie aufweist.

12. Nutzfahrzeugreifen nach einem der Ansprüche 1 bis 11, **dadurch gekennzeichnet, dass** die Wandabschnitte (4a, 4'a), welche sich zwischen den Grundanhebungen (7, 7") zueinander annähern, in die Umfangsrille (2, 2") hineinragende, paarweise gegenüberliegende, insbesondere nasenartig gestaltete Vorsprünge (6) begrenzen.

13. Nutzfahrzeugreifen nach einem der Ansprüche 1 bis 12, **dadurch gekennzeichnet, dass** die in Draufsicht zueinander konvex gekrümmten Wandabschnitte (4b) zu den Grundanhebungen (7, 7") an ihren radial inneren Enden einen Abstand (a₁) von 2,0 mm bis 4,0 mm aufweisen.

14. Nutzfahrzeugreifen nach einem der Ansprüche 1 bis 11, **dadurch gekennzeichnet, dass** die Rillenwände (4') der Umfangsrille (2') in Draufsicht wellenförmig und bezüglich einer von der Umfangsrichtung und der radialen Richtung aufgespannten Ebene symmetrisch verlaufen.

## Claims

1. Utility vehicle tyre with a tread strip with at least one circumferential groove (2, 2', 2") with a groove bottom (5) and groove walls (4, 4'), bottom elevations (7, 7', 7") which act as stone ejectors being configured on the groove bottom (5) centrally and distributed over the circumference with a height (h₁, h₃) and a greater extent in the circumferential direction than in the axial direction, the bottom elevations (7, 7', 7") either making contact with the groove walls (4, 4') or being at spacings (a₁) from them in the axial direction of up to 4.0 mm, and being delimited in the radial direction by a top face (8, 8', 8") with a circumferential face edge, the top face (8, 8', 8") sloping to the face edge, the groove walls (4, 4') having, between the bottom elevations (7, 7', 7"), converging wall sections (4a, 4'a) and, to the side of the bottom elevations (7, 7', 7"), wall sections (4b, 4'b) which are curved convexly with respect to one another in plan view, and the face edge of the top face (8, 8', 8") following the course of the wall sections (4b, 4'b) which are curved convexly with respect to one another, in such a way that the width of the bottom elevations (7, 7', 7") decreases towards its ends which lie in the circumferential direction, **characterized in that** the top face slopes uniformly from the height (h₁) which is present at the highest point of the respective bottom elevation (7, 7', 7") to the height (h₂) of the face edge, the maximum height (h₁, h₃) of the bottom elevations (7, 7', 7") in the radial direction being from 25% to 60% of the profile depth (T₁), and **in that** the wall sections (4b, 4'b), which are curved convexly with respect to one another in plan view, of the groove walls (4, 4') are curved convexly with respect to one another at least over the majority of their radial extent, as viewed in the cross section of the circumferential groove (2, 2', 2").

2. Utility vehicle tyre according to Claim 1, **characterized in that**, in plan view, the bottom elevations (7, 7', 7") have the form of rhombuses which are elongate in the circumferential direction and have rounded corners.

3. Utility vehicle tyre according to Claim 1 or 2, **characterized in that** the bottom elevations (7, 7', 7") are composed of a base part (7a, 7"a) with a constant height (h₂) in the radial direction and a dome-like upper part (7b, 7"b) which is placed onto it.

4. Utility vehicle tyre according to Claim 3, **characterized in that** the height (h₂, h₄) of the base part (7a, 7"a) of the bottom elevations (7, 7', 7") is from 35% to 90%, in particular from 40% to 80%, of the maximum height (h₁, h₃) of the bottom elevations (7, 7', 7").

5. Utility vehicle tyre according to one of Claims 1 to 4, **characterized in that** the top face (8") of the bottom elevations (7") has a core top face (8"a) and an edge top face (8"b) which surrounds the latter and slopes towards the face edge of the top face (8").

6. Utility vehicle tyre according to Claim 1 or 2, **characterized in that** the bottom elevations are delimited exclusively by their top faces.

7. Utility vehicle tyre according to Claim 1, 2 or 6, **characterized in that** the bottom elevations have the form of a half ellipsoid or a part piece of a half ellipsoid.

8. Utility vehicle tyre according to one of Claims 1 to 7, **characterized in that** the bottom elevations (7, 7', 7") have an extent length (l₁) of from 10.0 mm to 35.0 mm, in particular of from 15.0 mm to 25.0 mm, in the circumferential direction at their longest point.

9. Utility vehicle tyre according to one of Claims 1 to 8, **characterized in that** the maximum height (h₁, h₃) of the bottom elevations (7, 7', 7") is from 30% to 55%, preferably at most 50%, of the profile depth (T₁).

10. Utility vehicle tyre according to one of Claims 1 to 9, **characterized in that** the bottom elevations (7, 7', 7") have a width (b₁) of from 5.0 mm to 15.0 mm in the axial direction at their widest point.

11. Utility vehicle tyre according to one of Claims 1 to 10, **characterized in that** a groove path (2a) of the circumferential groove (2, 2") runs between the wall sections (4a) which converge between the bottom elevations (7, 7"), which groove path (2a) has, at its narrowest point, a width (B₂) of from 15% to 45%, in particular of at most 35%, of the width (B₁) of the circumferential groove (2, 2") at the tread strip periphery.

12. Utility vehicle tyre according to one of Claims 1 to 11, **characterized in that** the wall sections (4a, 4'a) which converge between the bottom elevations (7, 7") delimit projections (6) which protrude into the circumferential groove (2, 2"), lie opposite one another in pairs, and are, in particular, of lug-like design.

13. Utility vehicle tyre according to one of Claims 1 to 12, **characterized in that** the wall sections (4b) which are curved convexly with respect to one another in plan view are at a spacing (a₁) of from 2.0 mm to 4.0 mm from the bottom elevations (7, 7") at their radially inner ends.

14. Utility vehicle tyre according to one of Claims 1 to 11, **characterized in that** the groove walls (4') of the circumferential groove (2') run in a plan view in a wavelike manner and symmetrically with regard to a plane which is defined by the circumferential direction and the radial direction.

## Revendications

1. Pneumatique de véhicule utilitaire comprenant une bande de roulement pourvue d'au moins une rainure circonférentielle (2, 2', 2") pourvue d'un fond de rainure (5) et de parois de rainure (4, 4'), des élévations de fond (7, 7', 7"), qui sont réparties sur la circonférence dans le fond de rainure (5) et qui agissent au milieu comme des éjecteurs de pierres, étant conçues avec une hauteur (h₁, h₃) et une plus grande étendue dans la direction circonférentielle que dans la direction axiale, les élévations de fond (7, 7', 7") étant en contact avec les parois de rainure (4, 4') ou étant espacées de celles-ci dans la direction axiale de distances (a₁) pouvant atteindre 4,0 mm et étant limitées dans la direction radiale par une surface supérieure (8, 8', 8") pourvue d'un bord de surface circonférentiel, la surface supérieure (8, 8', 8") déclinant jusqu'au bord de surface, les parois de rainure (4, 4') entre les élévations de fond (7, 7', 7") des portions de paroi (4a, 4'a) se rapprochant les unes des autres et comportant, latéralement aux élévations de fond (7, 7', 7"), des portions de paroi (4b, 4'b) incurvées de manière convexe les unes par rapport aux autres en vue de dessus et le bord de la surface supérieure (8, 8', 8") suivant le tracé des portions de paroi (4b, 4'b) incurvées de manière convexe les unes par aux autres de telle sorte que la largeur des élévations de fond (7, 7', 7") diminue en direction de leurs extrémités situées dans la direction circonférentielle,
**caractérisé en ce que**
la surface supérieure décline uniformément de la hauteur (h₁), à l'emplacement le plus élevé de l'élévation de fond respective (7, 7', 7"), jusqu'à la hauteur (h₂) du bord de surface, la hauteur maximale (h₁, h₃) des élévations de fond (7, 7', 7") dans la direction radiale étant de 25 % à 60 % de la profondeur de sculpture (T₁) et **en ce que**
les portions de paroi (4b, 4'b) des parois de rainure (4, 4'), qui sont incurvées de manière convexe les uns vers les autres en vue de dessus, sont incurvées de manière convexe les unes vers les autres au moins sur la majeure partie de leur étendue radiale, dans une vue en coupe transversale de la rainure circonférentielle (2, 2', 2").

2. Pneumatique de véhicule utilitaire selon la revendication 1, **caractérisé en ce que** les élévations de fond (7, 7', 7") ont en vue de dessus la forme de losanges à coins arrondis qui sont allongés dans la direction circonférentielle.

3. Pneumatique de véhicule utilitaire selon la revendication 1 ou 2, **caractérisé en ce que** les élévations de fond (7, 7', 7") sont composées d'une partie de base (7a, 7"a) de hauteur constante (h₂) dans la direction radiale et pourvue d'une partie supérieure (7b, 7"b) en forme de dôme qui est placée sur celle-ci.

4. Pneumatique de véhicule utilitaire selon la revendication 3, **caractérisé en ce que** la hauteur (h₂, h₄) de la partie de base (7a, 7"a) des élévations de fond (7, 7', 7") est de 35 % à 90 %, en particulier de 40 % à 80 %, de la hauteur maximale (h₁, h₃) des élévations de fond (7, 7', 7").

5. Pneumatique de véhicule utilitaire selon l'une des revendications 1 à 4, **caractérisé en ce que** la surface supérieure (8") des élévations de fond (7") comporte une surface centrale supérieure (8"a) et une surface de bord supérieure (8"b) qui entoure celle-ci et qui décline vers le bord de la surface supérieure (8").

6. Pneumatique de véhicule utilitaire selon la revendication 1 ou 2, **caractérisé en ce que** les élévations de fond ne sont limitées que par leurs surfaces supérieures.

7. Pneumatique de véhicule utilitaire selon la revendication 1, 2 ou 6, **caractérisé en ce que** les élévations de fond ont la forme d'un demi-ellipsoïde ou d'une portion de demi-ellipsoïde.

8. Pneumatique de véhicule utilitaire selon l'une des revendications 1 à 7, **caractérisé en ce que** les élévations de fond (7, 7', 7") ont, à leur emplacement le plus long dans la direction circonférentielle, une longueur d'extension (l₁) de 10,0 mm à 35,0 mm, notamment de 15,0 mm à 25,0 mm.

9. Pneumatique de véhicule utilitaire selon l'une des revendications 1 à 8, **caractérisé en ce que** la hauteur maximale (h₁, h₃) des élévations de fond (7, 7', 7") est de 30 % à 55 %, de préférence d'au plus 50 %, de la profondeur de sculpture (T₁).

10. Pneumatique de véhicule utilitaire selon l'une des revendications 1 à 9, **caractérisé en ce que** les élévations de fond (7, 7', 7") ont, à leur emplacement le plus large dans la direction axiale, une largeur (b₁) de 5,0 mm à 15,0 mm.

11. Pneumatique de véhicule utilitaire selon l'une des revendications 1 à 10, **caractérisé en ce qu'**un chemin de rainure (2a) de la rainure circonférentielle (2, 2") s'étend entre les portions de paroi (4a) qui se rapprochent les unes des autres entre les élévations de fond (7, 7"), lequel chemin a, à son emplacement le plus étroit, une largeur (B₂) de 15 % à 45 %, notamment d'au plus 35 %, de la largeur (B₁) de la rainure circonférentielle (2, 2") à la périphérie de la bande de roulement.

12. Pneumatique de véhicule utilitaire selon l'une des revendications 1 à 11, **caractérisé en ce que** les portions de paroi (4a, 4'a), qui se rapprochent les unes des autres entre les élévations de fond (7, 7"), délimitent des saillies (6) opposées deux à deux, en particulier en forme d'ergots, et saillant dans la rainure circonférentielle (2, 2").

13. Pneumatique de véhicule utilitaire selon l'une des revendications 1 à 12, **caractérisé en ce que** les portions de paroi (4b), qui sont incurvées de manière convexe les unes par rapport aux autres en vue de dessus, sont à une distance (a₁) de 2,0 mm à 4,0 mm par rapport aux élévations de fond (7, 7") à leurs extrémités radialement intérieures.

14. Pneumatique de véhicule utilitaire selon l'une des revendications 1 à 11, **caractérisé en ce que** les parois de rainure (4') de la rainure circonférentielle (2') s'étendent en vue de dessus de manière ondulée et symétrique par rapport à un plan passant par la direction circonférentielle et la direction radiale.
